**Europäisches Patentamt**

**European Patent Office**

**Office européen des brevets**

(11) Veröffentlichungsnummer: **0 424 875 A2**

# EUROPÄISCHE PATENTANMELDUNG

(21) Anmeldenummer: **90120316.6**

(22) Anmeldetag: **23.10.90**

(51) Int. Cl.⁵: **G01C 11/02**

(30) Priorität: **23.10.89 DE 3935244**

(43) Veröffentlichungstag der Anmeldung:
**02.05.91 Patentblatt 91/18**

(84) Benannte Vertragsstaaten:
**AT BE CH DE DK ES FR GB GR IT LI LU NL SE**

(71) Anmelder: **Schmidt von Braun, Heiko Dr.**
**Tankenrain Salzgraben 2**
**W-8120 Weilheim(DE)**

(72) Erfinder: **Schmidt von Braun, Heiko Dr.**
**Tankenrain Salzgraben 2**
**W-8120 Weilheim(DE)**

(74) Vertreter: **Patentanwälte Beetz sen. - Beetz**
**jun. Timpe - Siegfried - Schmitt-Fumian-**
**Mayr**
**Steinsdorfstrasse 10**
**W-8000 München 22(DE)**

(54) **Verfahren zur Erkundung von Strukturen im Naturraum aus der Luft.**

(57) Die vorliegende Erfindung betrifft ein Verfahren zur Erkundung von Stukturen im Naturraum aus der Luft. Zu diesem Zweck wird die Position eines zur Erkundung verwendeten Flugkörpers dreidimensional im Weltkoordinatensystem zusammen mit dem Positionsmeßzeitpunkt erfaßt. Die zu untersuchende Struktur wird mit Sensoren in Stereoaufnahmetechnik bei gleichzeitiger zeitlicher Zuordnung der Meßdaten erfaßt. Die Positionsdaten und die Zeitdaten sowie die Stereomeßdaten werden eindeutig zuordbar miteinander verknüpft und selektiv abrufbar gespeichert.

EP 0 424 875 A2

# VERFAHREN ZUR ERKUNDUNG VON STRUKTUREN IM NATURRAUM AUS DER LUFT

Die vorliegende Erfindung betrifft ein Verfahren zur Erkundung von Strukturen im Naturraum aus der Luft.

Die Erkundung eines Naturraumes ist die erste Voraussetzung für jede Beurteilung des Ist-Zustandes und für jede Entscheidung darüber, ob in den Naturraum eingegriffen werden soll, um ihn nutzbar zu machen oder ihn gegenüber der Einwirkung von schädlichen Einflüssen zu erhalten.

In diesem Zusammenhang soll der Begriff Naturraum in seinem breitesten Bedeutungsinhalt verstanden werden. So umfaßt dieser bei den folgenden Betrachtungen die bebaute oder naturbelassene Erdoberfläche einschließlich einer gewissen Eindringtiefe in den Grund. Gleichermaßen sollen darunter auch wasserbedeckte Räume einschließlich einer bestimmten Eindringtiefe verstanden werden.

Zu untersuchende Naturräume werden in einem ersten Schritt kartiert und je nach Fragestellung werden interessierende Parameter anschließend erfaßt. Ist beispielsweise die Fragestellung die Erfassung des Gesundheitszustandes eines großflächigen Gebirgswaldgebietes, so wurde dies bislang durch eine Begehung des zu untersuchenden Gebietes durch Fachleute untersucht, falls überhaupt begehbar. Bei großflächigen Gebieten kann die Untersuchung aus Zeitgründen nur stichprobenartig erfolgen, d.h. , es ist nur eine sehr grobmaschige Begehung mögluch und die jeweilige Lagebestimmung von Schadensbefunden ist nur sehr näherungsweise möglich. Soll dasselbe zu untersuchende Gebiet hinsichtlich eines anderen Aspekts erneut untersucht werden, im vorliegenden Beispiel könnte dies eine geologische Fragestllung sein, so ist eine erneute Begehung durch einen anderen Fachmann, hier also durch einen Geologen anstatt durch einen Forstfachmann, erforderlich. Der Zeit- und Personalaufwand verdoppelt sich somit und die Verknüpfbarkeit der jeweiligen Befunde ist einerseits durch die verschiedenen Zeitpunkte, an denen die Untersuchungen stattgefunden haben und andererseits durch die jeweils nur näherungsweise erfolgte Lokalisierung sehr unzureichend.

Erkundungen aus der Luft wurden bislang lediglich mit Hinblick auf bestimmte Fragestellungen und unter Ausnutzung besonderen Filmmaterials durchgeführt. So wurde beispielsweise der Gesundheitszustand eines Waldes aus großer Höhe durch Falschfarbenfilme ermittelt. Aufgrund der großen Höhe ist die Auflösung insbesondere nach der Höhe einzelner Objekte nur sehr klein. Parameter, die durch solche Falschfarbenfilme nicht sichtbar gemacht werden können, sind einer solchen Erkundungsmethode per se nicht zugänglich.

Zusammenfassend läßt sich feststellen, daß die Begutachtung bzw. Beurteilung von unterschiedlichen Parametern eines Naturraums durch Fachleute verschiedener Disziplinen aufgrund der bislang schlechten Korrelierbarkeit von Daten sowie des zeitraubenden jeweils erneuten Erkundens pro Fragestellung nur sehr unzureichend und mit geringer Aussagekraft erfolgen kann. Darüber hinaus hemmt die herkömmliche Erkundungsmethodik die interdisziplinäre Diskussion von verschiedenen Fachleuten, weil diese im wesentlichen durch ihre eigenen Datenaufnahmearbeiten präokkupiert sind.

Der vorliegenden Erfindung liegt die Aufgabe zugrunde, ein Verfahren zur Erkundung von Strukturen im Naturraum aus der Luft anzugeben, das es ermöglicht, räumlich und zeitlich genau korrelierbare Meßdaten zur Verfügung zu stellen, die verschiedensten Fachleuten zur Beurteilung verschiedenster Fragestellungen eine ausreichende Basis bereitstellen.

Diese Aufgabe wird erfindungsgemäß durch das Verfahren mit den Merkmalen des Anspruchs 1 gelöst.

In den Unteransprüchen sind Merkmale bevorzugter Ausgestaltungen des erfindungsgemäßen Verfahrens gekennzeichnet.

Das erfindungsgemäße Verfahren liefert Meßdaten, die sowohl hinsichtlich des Zeitpunktes, an dem diese Daten gewonnen worden sind, als auch hinsichtlich der Koordinaten des Meßobjektes sowie des Meßsensors eindeutig bestimmt sind.

zu diesem Zweck ist der Flugkörper mit einem Navigationssystem ausgerüstet, mit dem die Koordinaten des Flugkörpers im Weltkoordinatensystem erfaßt werden können. Dies hat gegenüber herkömmlichen Geoerkundungssystemen den entscheidenen Vorteil, daß die Koordinaten des Meßobjekts und die Relativposition des Flugkörpers auch mit sehr großer Präzision hinsichtlich der Höhe bzw. der Z-Achse bestimmt sind. Diese Information ist beispielsweise zur Erfassung eines fluidführenden Rohrleitungssystems unter der Erdoberfläche durch elektromagnetische Meßverfahren von wesentlicher Bedeutung, da eine nur ungenaue Erfassung des Oberflächenreliefs zu unterschiedlichen Ergebnissen bei der Berechnung der Rohrlänge und Rohrtiefe ( = Reparaturtiefe) ergibt. Auch bei geologischen Fragestellungen sowie bei der Unteruschung dynamischer Oberflächenveränderungen ist die Erfassung der Z-Komponente der Koordinaten von ausschlaggebender Bedeutung. Mit der zur Durchführung des erfindungsgemäßen Verfahrens erforderlichen Präzision ist dies nur möglich, wenn die Navigation udn Positionserfassung des Flugkörpers im Weltkoordinatensystem erfolgt.

Die Erfassung von Meßdaten erfolgt erfindungsgemäß durch eine Stereomeßtechnik, die je nach Fragestellung verschieden implementiert sein kann. So können bei der Erstellung optischer Bilder im Frequenzbereich des sichtbaren Lichtes beispielsweise Stereomeßkammern verwendet werden. Es können jedoch auch Meßkammern zum Einsatz kommen, die zu untersuchende Strukturen aus einem schrägen Winkel heraus und aus verschiedenen Blickwinkeln erfassen, wobei in diesem Fall die entsprechenden Bilder in einem Bildbetrachtungsgerät eine stereoskopische Betrachtung ermöglichen.

Der Flugkörper wird im allgemeinen ein Flugzeug mit hoher Steigleistung sein, mit dem auch starke Höhenschwankungen im Naturraum gescannt werden können. Denkbar ist bei entsprechenden Fragestellungen auch der Einsatz von Helikoptern, gasgefüllten bemannten oder unbemannten Fesselballons oder unbemannten Flugkörpern.

Welche Art von Sensoren zum Einsatz kommt, hängt von der Fragestellung ab. Allen Sensoren gemeinsam ist jedoch, daß sie zwingend eine perspektivische, zumindest teilweise räumliche Darstellung des Meßobjektes ermöglichen. Fotomeßkammern für im sichtbaren Bereich sensibles Filmmaterial eignen sich beispielsweise zur Aufnahme zur Untersuchung von Wasseroberflächen, z.B. der Ausbreitung von Sturmflutwellen, zur Untersuchung dynami scher Vorgänge auf der Erdoberfläche, z.B. Lawinenabgänge oder tektonischer Veränderungen sowie bei Untersuchungen an bebauten urbanen Räumen. Nach demselben Prinzip, jedoch mit Scannern, das im Fernen infrarotempfindlich ist, kann beispielsweise zur Erfassung eines Wildbestandes eine Befliegung eines Gebietes erfolgen.

Dichteunterschiede im Untergrund können im Rahmen einer Altlastensanierung durch gravimetrische Meßsonden erfaßt werden.

Bestimmte Parameter einer zu untersuchenden Struktur können bei dem Einsatz des erfindungsgemaßen Verfahrens auch dadurch sichtbar gemacht werden, daß sie erst durch die lokale Einwirkung hoher Energie "angestoßen" werden. So kann beispielsweise ein hochenergetischer Laserstrahl auf eine Wasseroberfläche, auf der ein Schmutzfilm schwimmt, gerichtet werden, um eine kleine Probe des Films zu verdampfen, um anschließend den verdampften Teil mit spektroskopischen Methoden untersuchen zu können.

Diese Auflistung unterschiedlichster Einsatzbereiche des erfindungsgemäßen Verfahrens und die damit jeweils verbundene Auswahl geeigneter Detektoren soll lediglich die Anwendungsbreite illustrieren und ist jedoch nicht einschränkend zu verstehen. Wesentlich ist bei der Aufnahme der Meßdaten ebenso wie bei der Positionsbestimmung, daß der Zeitpunkt einer Messung jeweils genau festgehalten wird, um eine Korrelierung mit der Flugzeugposition herstellen zu können. Nachdem der verwendete Flugkörper eine Vielzahl von Meßsonden aufnehmen kann und somit gleichzeitig eine Vielzahl von unterschiedlichsten Meßparametern eines Untersuchungsobjektes gemessen werden können, sind die nach dem erfindungsgemäßen Verfahren gewonnenen und aufbereiteten Meßparameter je nach Fragestellung beliebig miteinander verschneidbar. D.h., die gewonnenen Meßdaten können auf einer Karte des untersuchten Naturraums am Orte des Meßobjektes gleichzeitig, nebeneinander oder zeitlich nacheinander dargestellt werden. Die Kombination verschiedenster Meßdaten bei der Darstellung der gewonnenen Meßergebnisse ermöglicht es Fachleuten verschiedener Disziplinen, die an den gleichen Meßobjekten entnommenen unterschiedlichen Meßparameter gemeinsam auszuwerten und interdisziplinär zu beurteilen.

Auch können solche gewonnenen Daten beliebig durch zu späteren Zeitpunkten erfolgte Messungen ergänzt werden bzw. es können aussagekräftige Vergleiche von Ist-Zuständen in verschiedenen Zeitabschnitten durchgeführt werden, aufgrund der präzisen Einhängung der gewonnenen Meßdaten in das Weltkoordinatensystem. Ferner ermöglicht es die Stereoaufnahmetechnik im sichtbaren Bereich Naturräume mit Bildbetrachtungsgeräten räumlich darzustellen, so daß die Abbildungen später unter ganz anderen Gesichtspunkten untersucht werden können, als dies bei der ursprünglichen Untersuchung der Fall war.

Wie sich aus dem obenstehenden ergibt, eröffnet das erfindungsgemäße Verfahren eine Vielfalt an Möglichkeiten zur Untersuchung von Naturräumen, deren Ergebnisse eindeutig und in einfache Weise so miteinander verschnitten werden können, daß Fachleute verschiedenster Fachrichtungen eine aussagekräftige Grundlage zur Entscheidungsfindung bereitgestellt bekommen.

## Ansprüche

1. Verfahren zur Erkundung von Strukturen im Naturraum aus der Luft, bei dem
- die Position eines zur Erkundung verwendeten Flugkörpers dreidimensional im Weltkoordinatensystem zusammen mit dem Positionsmeßzeitpunkt erfaßt wird,
- die zu untersuchende Struktur mit Sensoren in Stereoaufnahmetechnik bei gleichzeitiger zeitlicher Zuordnung der Meßdaten erfaßt werden, und
- die Positionsdaten, die Zeitdaten und die Stereomeßdaten eindeutig zuordbar miteinander verknüpft und selektiv abrufbar gespeichert werden.
2. Verfahren nach Anspruch 1,

dadurch gekennzeichnet, daß

die Position des die Sensoren tragenden Flugkörpers in bezug auf einen erdgestützten Fixpunkt und/oder mit einem Satellitennavigationssystem und/oder einem erdgestützten Navigationssystem erfaßt wird.

3. Verfahren nach Anspruch 1 oder 2,

dadurch gekennzeichnet, daß

die Positionserfassung und die Meßdatenerfassung synchron getriggert mit einer Taktzeit der Größenordnung von 1 sec. erfolgt.

4. Verfahren nach einem der vorstehenden Ansprüche,

dadurch gekennzeichnet, daß

die Sensoren zur Erfassung der zu untersuchenden Strukturen auf die Emission, Reflexion, Streuung oder Beugung elektromagnetischer Strahlung in vorbestimmten Frequenzbereichen ansprechen.

5. Verfahren nach einem der Ansprüche 1 bis 3,

dadurch gekennzeichnet, daß

die Sensoren zur Erfassung der zu untersuchenden Strukturen auf die Emission, Reflexion bzw. Streuung oder Beugung von akustischen Wellen in vorbestimmten Frequenzbereichen ansprechen.

6. Verfahren nach einem der Ansprüche 1 bis 3,

dadurch gekennzeichnet, daß

die Sensoren Probeentnahmeeinrichtungen aufweisen.

7. Verfahren nach einem der vorstehenden Ansprüche,

dadurch gekennzeichnet, daß

die zu untersuchende Struktur durch Energieeinwirkung lokal verändert wird, zur Beobachtung der Veränderung bestimmter Parameter unter Energieeinwirkung.